# EUROPEAN PATENT SPECIFICATION

(11) **EP 4 563 429 B1**
(45) Date of publication and mention of the grant of the patent: **27.05.2026**
(21) Application number: 23213057.5
(22) Date of filing: 29.11.2023
(51) Int. Cl.: B60W 30/18, B60W 40/072, B60W 60/00, G01C 21/34, G01C 21/36, G08G 1/01, G08G 1/0962, G08G 1/0968, G08G 1/0969

(54) **A COMPUTER SYSTEM AND A METHOD FOR ASSISTING A VEHICLE IN TRAVERSING AN UPCOMING ROAD SEGMENT**
COMPUTERSYSTEM UND VERFAHREN ZUR UNTERSTÜTZUNG EINES FAHRZEUGS BEIM BEFAHREN EINES BEVORSTEHENDEN STRASSENSEGMENTS
SYSTÈME INFORMATIQUE ET PROCÉDÉ D'ASSISTANCE D'UN VÉHICULE LORS DE LA TRAVERSÉE D'UN SEGMENT DE ROUTE À VENIR

(43) Date of publication of application: 04.06.2025
(73) Proprietor: VOLVO TRUCK CORPORATION, 405 08 Göteborg (SE)
(72) Inventor: QUIBRIAC, Yann, 69007 Lyon (FR); RIBERO, Raphael, 69390 Millery (FR)
(74) Representative: Ström & Gulliksson AB

(56) References cited:
- DE-A1- 102020 210 173
- US-A1- 2019 286 140
- US-A1- 2021 197 852
- US-B1- 11 460 848

## Description

### TECHNICAL FIELD

The invention relates generally to vehicles. In particular aspects, the invention relates to a computer system and a method for assisting a vehicle in traversing an upcoming road segment. The invention can be applied to heavy-duty vehicles, such as trucks, buses, and construction equipment, among other vehicle types. Although the invention may be described with respect to a particular vehicle, the invention is not restricted to any particular vehicle.

### BACKGROUND

While driving, a vehicle may need to traverse road segments requiring a high level of maneuvering skills. Particularly in urban areas narrow streets and complex intersections can be very difficult to traverse, especially if the vehicle is a heavy vehicle.

DE102020210173A1 describes a method for assisting a driver in narrow passages in a travel path. US2021/197852A1 describes route planning for autonomous vehicles, by determining whether a route is feasible for the vehicle. US2019/286140A1 describes a vehicle control unit performing travel control of a host vehicle. US11460848 describes a method of adjusting a trajectory of an autonomous vehicle.

In view of the above problem there is a need for improvements applicable to vehicles in traversing road segments of increased driving difficulty.

### SUMMARY

According to a first aspect of the invention, a computer system is provided. The computer system comprises processing circuitry configured to: obtain a driving difficulty of an upcoming road segment for a host vehicle of a vehicle type, the driving difficulty based on at least one of: points of a multipoint turn of at least one vehicle of the vehicle type traversing the upcoming road segment; a width of a variability band of a plurality of turning trajectories of at least one vehicle of the vehicle type traversing the upcoming road segment. The processing circuitry is further configured to assist the host vehicle in traversing the upcoming road segment. The first aspect of the invention may seek to identify difficult road segments, and to make it easier for the vehicle to traverse the difficult road segment. A technical benefit may include improved identification of upcoming road segments having an increased driving difficulty, as well as facilitated traversing of such upcoming road segments.

Optionally in some examples, including in at least one preferred example, the points of a multipoint turn indicates forward and reverse operations by the host vehicle in traversing the upcoming road segment. A technical benefit may include using a simple and indicative approach to assess the driving difficulty.

Optionally in some examples, including in at least one preferred example, the width of the variability band indicates driving precision by the host vehicle in traversing the upcoming road segment. A technical benefit may include using another, yet simple approach to obtain the driving difficulty.

Optionally in some examples, including in at least one preferred example, assisting the host vehicle in traversing the upcoming road segment further comprises: obtain a preferred trajectory for the host vehicle, and assist the host vehicle by guiding the host vehicle along the preferred trajectory. A technical benefit may include using a best-mode trajectory as a reference, thereby optimizing the vehicle operation when traversing the upcoming road segment.

Optionally in some examples, including in at least one preferred example, assisting the host vehicle by guiding the host vehicle along the preferred trajectory further comprises at least one of: guide host vehicle by visualizing the preferred trajectory to the driver; guide the host vehicle by applying steering assist; or guide the host vehicle by applying at least partly autonomous driving. A technical benefit may include providing efficient, reliable, and easy to follow guidance along the road segment, whereby driving safety and efficiency is further improved.

Optionally in some examples, including in at least one preferred example, the processing circuitry is further configured to: obtain the preferred trajectory from a plurality of reference trajectories, wherein each reference trajectory corresponds to a trajectory of at least one vehicle of the vehicle type traversing the upcoming road segment. A technical benefit may include providing a reliable trajectory as reference, as this is determined from a number of previous traversals of the road segment.

Optionally in some examples, including in at least one preferred example, the processing circuitry is further configured to: obtain the variability band from the plurality of reference trajectories, and obtain the preferred trajectory based on the variability band. A technical benefit may include improved reliability in obtaining the most preferred trajectory for the road segment.

Optionally in some examples, including in at least one preferred example, the processing circuitry is further configured to: obtain the points of a multipoint turn from the plurality of reference trajectories, and obtain the preferred trajectory based on the total number of points of the multipoint turn for each reference trajectory. A technical benefit may also in this case include improved reliability in obtaining the most preferred trajectory for the road segment.

Optionally in some examples, including in at least one preferred example, obtaining the driving difficulty of an upcoming road segment for the host vehicle further comprises: obtain a steering angle spread of at least one vehicle of the vehicle type traversing the upcoming road segment from the points of the multipoint turn and/or from the width of the variability band, and obtain the driving difficulty based on the steering angle spread. A technical benefit may include using a simple parameter for obtaining the driving difficulty.

Optionally in some examples, including in at least one preferred example, obtaining the driving difficulty of an upcoming road segment for the host vehicle further comprises: obtain a total number of braking operations of at least one vehicle of the vehicle type traversing the upcoming road segment, and obtain the driving difficulty based on the total number of braking operations. A technical benefit may also in this case include using a simple parameter for obtaining the driving difficulty.

Optionally in some examples, including in at least one preferred example, obtaining the driving difficulty of an upcoming road segment for the host vehicle further comprises: obtain the maximum and/or minimum speed of at least one vehicle of the vehicle type traversing the upcoming road segment, and obtain the driving difficulty based on the maximum and/or minimum speed. A technical benefit may include using a simple and easy retrievable parameter for obtaining the driving difficulty.

Optionally in some examples, including in at least one preferred example, obtaining the driving difficulty of an upcoming road segment for the host vehicle further comprises: obtain a relationship between the maximum and/or minimum speed of at least one vehicle of the vehicle type traversing the upcoming road segment and the maximum speed limit for the upcoming road segment, and obtain the driving difficulty based on the relationship. A technical benefit may include using an indicative and easy retrievable parameter for obtaining the driving difficulty.

Optionally in some examples, including in at least one preferred example, the processing circuitry is further configured to: indicate the upcoming road segment on a map of the host vehicle. A technical benefit may include notifying the driver of upcoming road segments of increased driving difficulty, thereby allowing the driver to choose another route to avoid the road segment.

Optionally in some examples, including in at least one preferred example, the processing circuitry is further configured to: indicate the driving difficulty of the upcoming road segment on a map of the host vehicle. A technical benefit may include notifying the driver of how different difficulty levels in the vicinity of the host vehicle, thereby allowing for improved route planning by the driver.

Optionally in some examples, including in at least one preferred example, the processing circuitry is further configured to: obtain a skill level of the driver of the associated vehicle, and to obtain the driving difficulty based on the driver's skill level. A technical benefit may include a more accurate and personalized obtaining of the driving difficulty.

Optionally in some examples, including in at least one preferred example, the points of a multipoint turn indicates forward and reverse operations by the host vehicle in traversing the upcoming road segment, the width of the variability band indicates driving precision by the host vehicle in traversing the upcoming road segment, assisting the host vehicle in traversing the upcoming road segment further comprises: obtain a preferred trajectory for the host vehicle, and assist the host vehicle by guiding the host vehicle along the preferred trajectory, assisting the host vehicle by guiding the host vehicle along the preferred trajectory further comprises at least one of: guide host vehicle by visualizing the preferred trajectory to the driver; guide the host vehicle by applying steering assist; or guide the host vehicle by applying at least partly autonomous driving, wherein the processing circuitry is further configured to: obtain the preferred trajectory from a plurality of reference trajectories, wherein each reference trajectory corresponds to a trajectory of at least one vehicle of the vehicle type traversing the upcoming road segment, wherein the processing circuitry is further configured to: obtain the variability band from the plurality of reference trajectories, and obtain the preferred trajectory based on the variability band, wherein the processing circuitry is further configured to: obtain the points of a multipoint turn from the plurality of reference trajectories, and obtain the preferred trajectory based on the total number of points of the multipoint turn for each reference trajectory, wherein obtaining the driving difficulty of an upcoming road segment for the host vehicle further comprises: obtain a steering angle spread of at least one vehicle of the vehicle type traversing the upcoming road segment from the points of the multipoint turn and/or from the width of the variability band, and obtain the driving difficulty based on the steering angle spread, wherein obtaining the driving difficulty of an upcoming road segment for the host vehicle further comprises: obtain a total number of braking operations of at least one vehicle of the vehicle type traversing the upcoming road segment, and obtain the driving difficulty based on the total number of braking operations, wherein obtaining the driving difficulty of an upcoming road segment for the host vehicle further comprises: obtain the maximum and/or minimum speed of at least one vehicle of the vehicle type traversing the upcoming road segment, and obtain the driving difficulty based on the maximum and/or minimum speed, wherein obtaining the driving difficulty of an upcoming road segment for the host vehicle further comprises: obtain a relationship between the maximum and/or minimum speed of at least one vehicle of the vehicle type traversing the upcoming road segment and the maximum speed limit for the upcoming road segment, and obtain the driving difficulty based on the relationship, wherein the processing circuitry is further configured to: indicate the upcoming road segment on a map of the host vehicle, wherein the processing circuitry is further configured to: indicate the driving difficulty of the upcoming road segment on a map of the host vehicle, wherein the processing circuitry is further configured to: obtain a skill level of the driver of the associated vehicle, and to obtain the driving difficulty based on the driver's skill level, wherein the processing circuitry is further configured to store traversing data of the host vehicle traversing the road segment.

According to a second aspect of the invention, a vehicle is provided. The vehicle comprises the computer system of the first aspect. The second aspect of the invention may seek to identify difficult road segments, and to make it easier for the vehicle to traverse the difficult road segment. A technical benefit may include improved identification of upcoming road segments having an increased driving difficulty, as well as facilitated traversing of such upcoming road segments.

According to a third aspect of the invention, a computer-implemented method is provided. The computer-implemented method comprises: obtaining, by processing circuitry of a computer system, a driving difficulty of an upcoming road segment for a host vehicle of a vehicle type, the driving difficulty based on at least one of: points of a multipoint turn of at least one vehicle of the vehicle type traversing the upcoming road segment; a width of a variability band of a plurality of turning trajectories of at least one vehicle of the vehicle type traversing the upcoming road segment. The method further comprises assisting the host vehicle in traversing the upcoming road segment. The third aspect of the invention may seek to identify difficult road segments, and to make it easier for the vehicle to traverse the difficult road segment. A technical benefit may include improved identification of upcoming road segments having an increased driving difficulty, as well as facilitated traversing of such upcoming road segments.

Optionally in some examples, including in at least one preferred example, assisting the host vehicle in traversing the upcoming road segment further comprises: obtaining a preferred trajectory for the host vehicle, and assisting the host vehicle by guiding the host vehicle along the preferred trajectory. A technical benefit may include using a best-mode trajectory as a reference, thereby optimizing the vehicle operation when traversing the upcoming road segment.

According to a fourth aspect of the invention, a computer program product is provided. The computer program product comprises program code for performing, when executed by a processing circuitry, the method of the third aspect.

According to a fifth aspect of the invention, a non-transitory computer-readable medium is provided. The non-transitory computer-readable medium comprises instructions, which when executed by a processing circuitry, cause the processing circuitry to perform the method of the third aspect.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary side view of a host vehicle according to an example.
**FIGS. 2A-B** are exemplary diagrams of an assist system according to different examples.
**FIG. 3A** is a schematic view of a graphical user interface of a host vehicle according to an example.
**FIG. 3B** is a schematic view of a graphical user interface of a host vehicle according to an example.
**FIGS. 4-6** are top views of a host vehicle traversing road segments according to different examples.
**FIG. 7** is a driver's view in a host vehicle approaching a road segment according to an example.
**FIG. 8** is a flow chart of an exemplary method to assist a host vehicle in traversing an upcoming road segment according to an example.
**FIG. 9** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the invention.

The examples presented herein provide a solution to improve driving of a host vehicle, in particular a heavy duty vehicle such as a truck, a bus, etc. which normally require a significant amount of maneuver space. To handle narrow traffic situations, such as tight corners, the host vehicle obtains a driving difficulty for an upcoming road segment. The driving difficulty is based on previous traversals of the upcoming road segment by one or more vehicles of the same vehicle type as the host vehicle. Once the driving difficulty is obtained, the host vehicle is assisted in traversing the upcoming road segment.

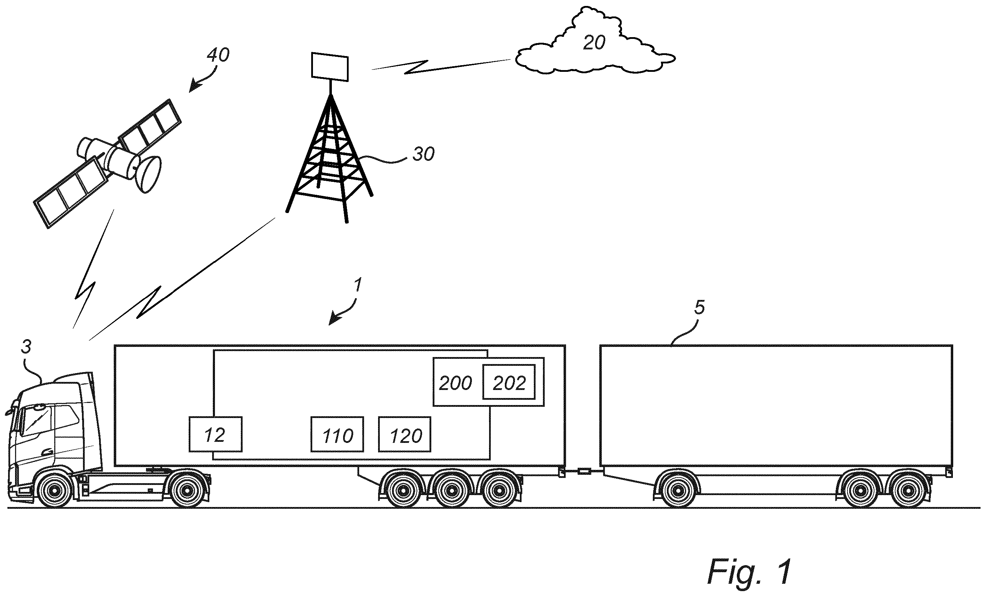

**FIG. 1** is an exemplary side view of a host vehicle **1** according to one example. The host vehicle **1,** herein the form of a truck, may or may not be an articulated vehicle. In the shown example the truck **1** comprises a tractor unit **3** and a trailer **5** being pulled by the tractor unit **3.** The host vehicle **1** is programmed to assist the driver in traversing an upcoming road segment **7** based on a driving difficulty **DD,** as will be described further in the following. For this purpose the host vehicle **1** comprises, at least to some extent, processing circuitry **110** forming part of a computer system **100** (see **FIG. 10**). The processing circuitry **110** is configured to implement an assist system **200.**

The host vehicle **1** may further comprise communications circuitry **12** configured to receive and/or send communication. The communications circuitry **12** may be configured to enable the host vehicle **1** to communicate with one or more external devices or systems such as a cloud server **20.** The communication with the external devices or systems may be directly or via a communications interface such as a cellular communications interface **30,** such as a radio base station. The cloud server **20** may be any suitable cloud server exemplified by, but not limited to, Amazon Web Services (AWS), Microsoft Azure, Google Cloud Platform (GCP), IBM Cloud, Oracle Cloud Infrastructure (OCI), DigitalOcean, Vultr, Linode, Alibaba Cloud, Rackspace etc. The communications interface may be a wireless communications interface exemplified by, but not limited to, Wi-Fi, Bluetooth, Zigbee, Z-Wave, LoRa, Sigfox, 2G (GSM, CDMA), 3G (UMTS, CDMA2000), 4G (LTE), 5G (NR) etc. The communication circuitry **12** may, additionally or alternatively, be configured to enable the host vehicle **1** to be operatively connected to a Global Navigation Satellite System (GNSS) **40** exemplified by, but not limited to, global positioning system (GPS), Globalnaya Navigatsionnaya Sputnikovaya Sistema (GLONASS), Galileo, BeiDou Navigation Satellite System, Navigation with Indian Constellation (NavIC) etc. The host vehicle **1** may be configured to utilize data obtain from the GNSS **40** to determine a geographical location of the host vehicle **1.**

The host vehicle **1** in **FIG. 1** comprises the computer system **100** and the assist system **200.** The computer system **100** may be operatively connected to the assist system **200** and the communications circuitry **12** of the host vehicle **1.** The computer system **100** comprises processing circuitry **110.** The computer system **100** may comprise a storage device **120,** advantageously a non-volatile storage device such as a hard disk drives (HDDs), solid-state drives (SSDs) etc. In some examples, the storage device **120** is operatively connected to the computer system **100.** The assist system **200** may comprise assist system processing circuitry **202;** the assist system processing circuitry **202** may be part of the processing circuitry **110** of the computer system **100.**

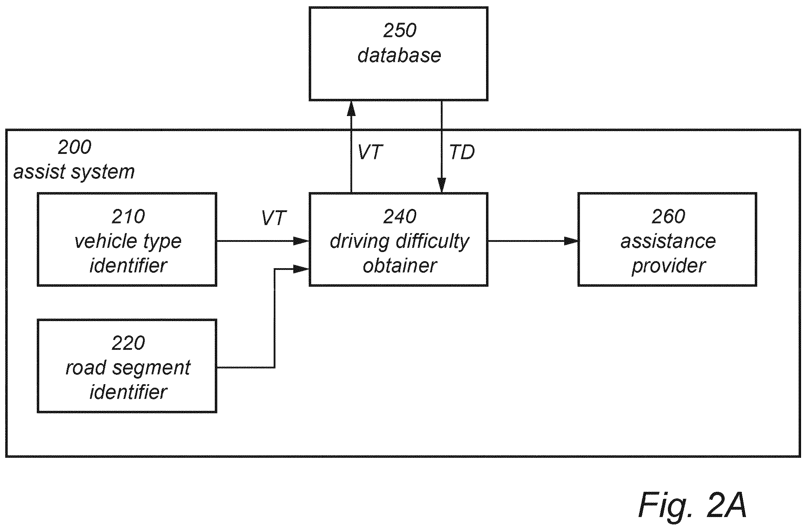

**FIG. 2A** is an exemplary block diagram of an architecture of an assist system **200,** which is capable of assisting the host vehicle **1** in traversing the upcoming road segment 7. The computer system **100** is preferably configured to provide the functions and features of the assist system **200.**

The assist system **200** comprises a vehicle type identifier **210.** The vehicle type identifier **210** is configured to identify the vehicle type **VT** of the host vehicle **1.** The vehicle type **VT** may be obtained in various ways and at various levels. For example, at a highest level the vehicle type identifier **210** may be configured to identify the host vehicle type **VT** as being one of a passenger car, a truck, or a bus. At a lowest level, the vehicle type identifier **210** applies a much higher resolution such that the vehicle type **VT** may be identified as a specific type having substantially the same physical properties as the host vehicle **1.**

Physical properties of the host vehicle **1** may be used to identify the type **VT** of the host vehicle **1.** Examples of physical properties that may be used are the length of the host vehicle **1,** if the host vehicle **1** is articulated or rigid, the distance between the front and rear axles of the host vehicle **1,** if the host vehicle **1** has any liftable wheel axle or not, if the host vehicle **1** allows for rear axle steering or not, if the host vehicle **1** is a conventional truck or a cab over engine truck, etc. Such physical properties, used by the vehicle type identifier **210** to identify the vehicle type **VT,** may be stored in a memory and accessed by the vehicle type identifier **210.** Optionally, or in combination with stored data, one or more physical properties may be obtained by various hardware and/or software. Such hardware and/or software may be incorporated in the vehicle type identifier **210** or it may be separate components in communication with the vehicle type identifier **210.** For example, the hardware and/software used to determine one or more physical properties of the host vehicle **1** may comprise image processing services, sensors, etc.

The assist system **200** further comprises a road segment identifier **220.** The road segment identifier **220** is configured to identify at least one upcoming road segment **7** of the host vehicle **1.** Typically, the at least one upcoming road segment **7** is a part of a planned route of the host vehicle **1,** or a part of road segments **7** within a specified distance from the location of the host vehicle **1.**

The assist system **200** also comprises a driving difficulty obtainer **240.** The driving difficulty obtainer **240** is configured to obtain a driving difficulty **DD** of an upcoming road segment **7** for the host vehicle **1.** In order to obtain the driving difficulty **DD,** the driving difficulty obtainer **240** has access to traversing data **TD** of vehicles of the same vehicle type **VT** previously traversing the upcoming road segment **7.**

The assist system **200** is in communication with a database **250** which may or may not form part of the assist system **200.** The database **250** stores such previous traversing data **TD,** not necessarily linked to any specific upcoming road segment **7.**

The driving difficulty obtainer **240** is configured to, from the traversing data **TD,** obtain a driving difficulty **DD** of a certain upcoming road segment **7.** The driving difficulty **DD** may be based on points of a multipoint turn in the traversing data **TD.** Hence, if the traversing data **TD** comprises information representing a multipoint turn at a specific location, this will indicate a driving difficulty **DD** of the upcoming road segment 7 at that specific location.

Optionally, or in combination, the driving difficulty **DD** may be based on a width of a variability band of a plurality of turning trajectories in the traversing data **TD.** Hence, if the traversing data **TD** comprises information representing multiple turning trajectories for vehicles traversing the same road segment, the width of the variability band for these multiple turning trajectories will indicate a driving difficulty **DD** of the upcoming road segment 7 containing that specific location.

The assist system **200** further comprises an assistance provider **260.** Based on the determined driving difficulty **DD** for an upcoming road segment 7, the assistance provider **260** is configured to assist the host vehicle **1** in traversing the upcoming road segment 7.

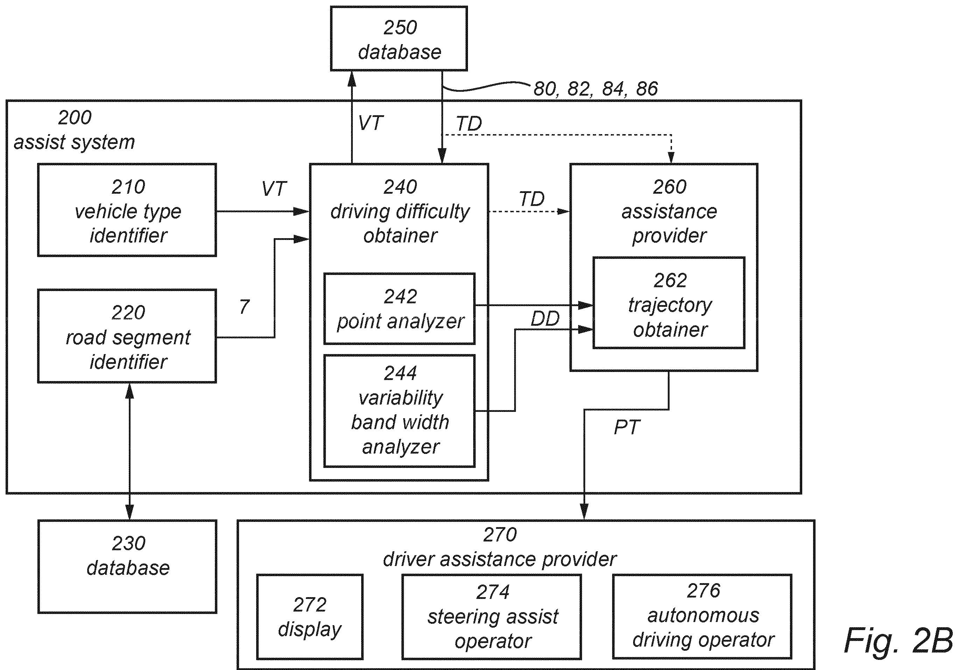

A more detailed example of an assist system **200** is shown in **FIG. 2B****.** The road segment identifier **220** is configured to identify an upcoming road segment 7 for the host vehicle **1.** The road segment identifier **220** may identify road segments 7 as described with reference to **FIG. 2A****,** i.e. identify all road segments 7 forming part of the planned route of the host vehicle **1,** and/or identify all road segments 7 within a specified radius from the location of the host vehicle **1.** Optionally, the road segment identifier **220** may identify all road segments **7** that are located within a specific time from the location of the host vehicle **1.** The specific time may be determined based on normal traffic conditions, the maximum allowed speed, etc.

Optionally, road segments 7 to be identified may be pre-stored in a database **230.** The database **230** may form part of the assist system **200,** or it may be a separate and remote data structure being accessed by the assist system **200.** The database **230** is according to one example storing road segments 7 of assumed, and/or previously determined increased driving difficulty. Pre-stored road segments 7 may improve processing speed of the assist system **200.**

Assumed increased driving difficulty may be determined based on one or more of a plurality of parameters. Once a road segment 7 is identified as being associated with a driving difficulty **DD,** the coordinates of that road segment 7 may be stored in the database **230.** Optionally, for example, if a certain road segment is often causing traffic to slow down, this may indicate increased driving difficulty whereby the road segment 7 is stored. In another example, if a certain road segment comprises a narrow street, this may indicate increased driving difficulty whereby the road segment 7 is stored. In a yet further example, certain road segments may be manually set as having an increased driving difficulty by drivers, traffic planners, etc.

The assist system **200** of **FIG. 2B** further comprises the driving difficulty obtainer **240.** The driving difficulty obtainer **240** is configured to obtain a driving difficulty **DD** for one or more upcoming road segments 7. Preferably, each upcoming road segment 7 identified by the road segment identifier **220** is assessed.

The driving difficulty **DD** is obtained based on the identified road segment 7 and the identified vehicle type **VT.** As previously described with reference to **FIG. 2A****,** the driving difficulty obtainer **240** is configured to determine the driving difficulty **DD** from previous traffic situations. Specifically, the driving difficulty **DD** is obtained by analyzing traversing data **TD** from at least one vehicle of the same vehicle type **VT** as the host vehicle **1** when traversing the upcoming road segment 7. The driving difficulty **DD** may be obtained by analyzing traversing data **TD** from the host vehicle **1** during a previous traversing of the upcoming road segment 7, or from another vehicle than the host vehicle **1.** For a road segment 7 associated with a driving difficulty **DD,** the traversing data **TD** comprises information representing points of a multipoint turn and/or a width of a variability band of a plurality of turning trajectories. For this purpose, the driving difficulty obtainer **240** comprises a point analyzer **242** and/or a variability band width analyzer **244.**

Traversing data **TD** may be stored in the database **250,** in this embodiment forming a second database. The second database **250** may form part of the assist system **200** or it may be a separate and remote data structure being accessed by the assist system **200.** The second database **250** may be incorporated in the first database **230** or these databases **230, 250** may be separate data structures. The second database **250** stores traversing data **TD** from one or more vehicles traversing the upcoming road segment **7.** Although the assist system **200** will be able to operate with only one record of traversing data **TD,** the assist system **200** will benefit from a larger amount of stored records in terms of accuracy and reliability. Preferably, the second database **250** stores, for each road segment 7 and for each vehicle type **VT,** traversing data **TD** from a plurality of traversing trajectories.

The driving difficulty obtainer **240** may be configured to determine the driving difficulty **DD** from the most relevant traversing data **TD** in terms of vehicle type **VT.** In such example traversing data **TD** may be missing for the specific vehicle type **VT** of the host vehicle **1,** and traversing data **TD** for another vehicle type **VT,** being determined to be at least somewhat similar to the host vehicle **1,** may consequently be selected. Further, as an example only, if a driving difficulty **DD** is obtained for a specific upcoming road segment **7** based on a specific vehicle type **VT** being shorter than the host vehicle **1,** the assist system **200** may obtain the same driving difficulty **DD** for the host vehicle **1** even if traversing data **TD** is missing for the exact vehicle type **VT** of the host vehicle **1.**

The assist system **200** further comprises the assistance provider **260.** Based on the obtained driving difficulty **DD,** the assistance provider **260** is configured to assist the host vehicle **1** in traversing the upcoming road segment **7.** The determined driving difficulty **DD** may be a binary value, i.e. the determined driving difficulty **DD** of the upcoming road segment 7 may be determined as either existing or non-existing. In other examples the obtained driving difficulty **DD** for the upcoming road segment 7 is any number of a specific scale, such as between 0 and 100 where 0 indicates non-existing driving difficulty **DD** and 100 indicates maximum driving difficulty **DD.**

The assistance provider **260** comprises a trajectory obtainer **262** being configured to determine a preferred trajectory **PT** through the upcoming road segment **7.** The preferred trajectory **PT** is preferably based on the traversing data **TD,** accessed either directly from the second database **250** or via the driving difficulty obtainer **240,** as well as on the obtained driving difficulty **DD.** Optionally, the preferred trajectory **PT** may also be based on the vehicle type **VT** of the host vehicle **1.**

The preferred trajectory **PT** is used by a driver assistance provider **270.** The driver assistance provider **270** may form part of the assist system **200,** or it may be a separate service of the host vehicle **1** which is controlled by the assist system **200** by the assist system **200** providing the required input.

The driver assistance provider **270** comprises a display **272,** a steering assist operator **274,** and/or an autonomous driving operator **276.** As the preferred trajectory **PT** is transmitted to the driver assistance provider **270,** the driver of the host vehicle **1** will be assisted in traversing the upcoming road segment **7** along the preferred trajectory **PT** by the display **272** visualizing the preferred trajectory **PT** to the driver of the host vehicle **1,** by the steering assist operator **274** applying steering assist through the upcoming road segment **7,** and/or by the autonomous driving operator **276** applying at least partly autonomous driving through the upcoming road segment **7.**

Optionally, the host vehicle **1** may be configured to record the trajectory when the host vehicle **1** is traversing the road segment **7,** and the assist system **200** may be configured to store the recorded trajectory as traversing data **TD.** In such example, additional reference data will be provided for future vehicles approaching the same road segment **7.**

In a further example, the assist system **200** may be configured to obtain a skill level of the driver of the host vehicle **1.** The skill level may be manually inputted by the driver before take-off, or it may be determined during driving of the host vehicle **1.** If a skill level of the driver is obtained, the driving difficulty obtainer **240** may utilize this parameter when obtaining the driving difficulty **DD** of the road segment **7.**

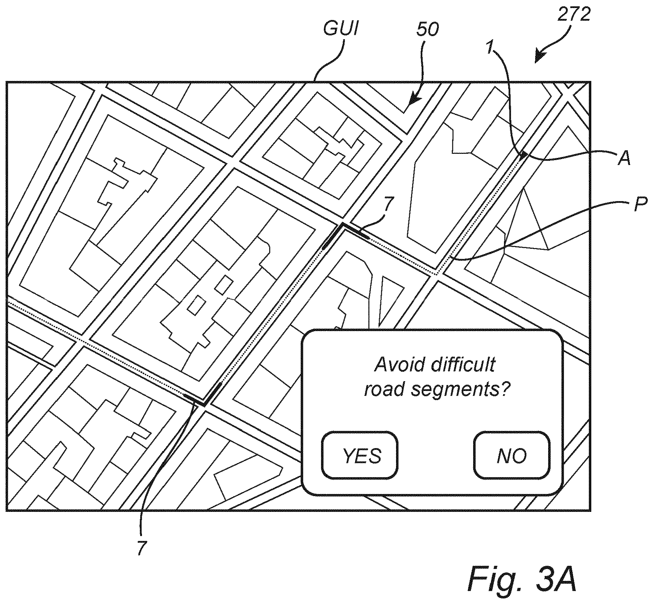

In **FIG. 3A** an example of a graphical user interface **GUI** of the host vehicle **1** is shown. The graphical user interface **GUI** is configured to show a map **50** on a display **272** of the host vehicle **1.** The map **50** is dynamic, i.e. it shows the current position **A** of the host vehicle **1** as well as a planned route **P,** indicated by the dashed line in **FIG. 3A****,** of the host vehicle **1.**

The graphical user interface **GUI** is further configured to indicate upcoming road segments **7** for which a driving difficult **DD** has been obtained. As is shown in **FIG. 3A****,** the driver may be prompted by the graphical user interface **GUI** to manually decide, by appropriate input to the graphical user interface **GUI,** if a route planner of the host vehicle **1** is allowed to include upcoming road segments **7** for which a driving difficulty has been obtained. In the shown example, the planned route **P** comprises two upcoming road segments **7.** If the driver decides to avoid these by interacting with the "NO" button in the graphical user interface **GUI,** the route planner will update the planned route **P** to circumvent these road segments **7.**

The road segments **7** may be shown simply as being associated with a driving difficulty. In an example, in case the driving difficulty is determined as one of a plurality of levels, the graphical user interface **GUI** is configured to also show the level of driving difficulty **DD** of each road segment **7.** Such indication may be made using a color scheme, such as a medium driving difficulty **DD** is shown in orange color while a high driving difficulty **DD** is shown in red color.

Optionally, the graphical user interface **GUI** is indicating all road segments 7 for which a driving difficulty **DD** has been obtainer and which are present on the map **50.** Hence, the selection of road segments **7** is in such example not linked with any planned route **P,** but the indicated road segments **7** will be updated as the map **50** is updated.

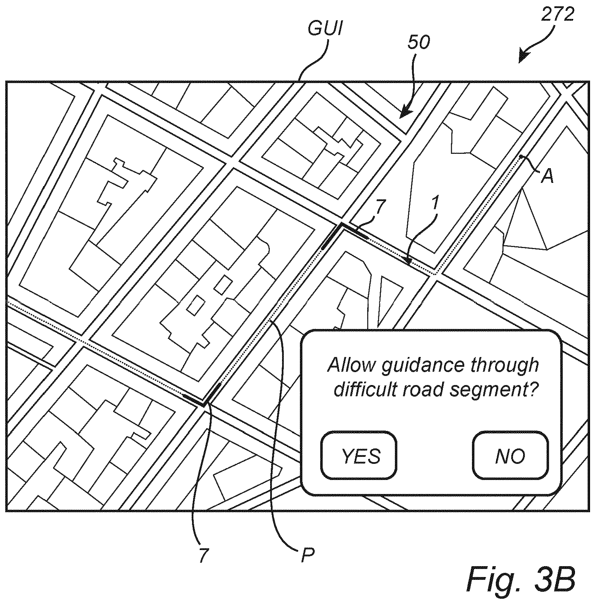

**FIG. 3B** shows another example of the graphical user interface **GUI,** at a situation where the host vehicle **1,** travelling along the planned route **P,** is approaching an upcoming road segment **7** for which a driving difficulty **DD** has been obtained. At this situation, the graphical user interface **GUI** of the display **272** may be configured to prompt the driver to manually decide, by appropriate input to the graphical user interface **GUI,** if the assist system **200** of the host vehicle **1** is allowed to provide assistance when traversing the upcoming road segment **7.**

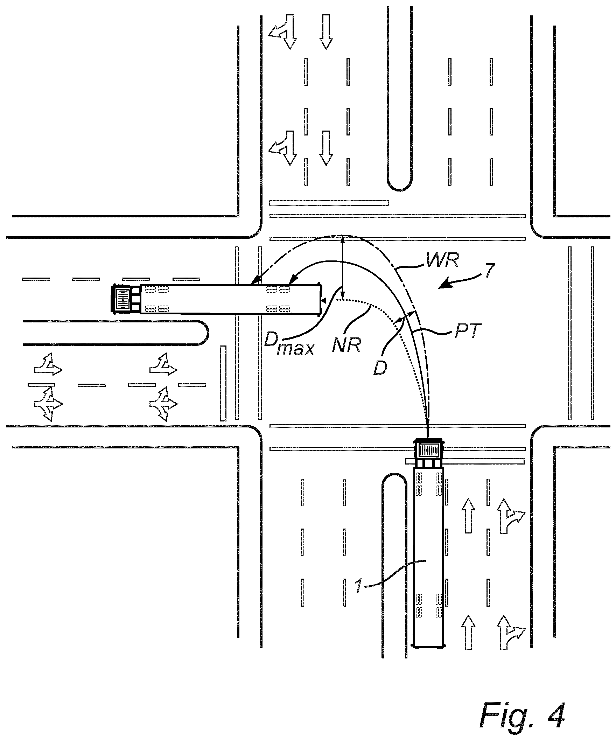

**FIG. 4** shows an example of a host vehicle **1** traversing a left turn. In the shown example, the solid line **PT** indicates the most preferred trajectory for the host vehicle **1.** However, for this road segment 7, i.e. the left turn, traversing data **TD** is stored representing previous traversals of vehicles. The traversing data **TD** comprises information of a previous vehicle traversing the road segment 7 along a narrow route **NR** indicated by the inner dashed line, as well as information of a previous vehicle traversing the road segment 7 along a wide route **WR** indicated by the outer dashed line. It should be realized that further traversing data **TD** may be stored for the road segment 7, comprising information of one or more previous vehicles traversing the road segment 7 along routes between the narrow route **NR** and the wide route **WR.** The narrow route **NR** and the wide route **WR** form outer boundaries of the traversing data **TD** for this road segment 7, and may be a result of less experienced drivers traversing the road segment 7. A distance **D** between these boundaries forms a variability band along the road segment 7. The distance **D** may for example extend normal to the preferred trajectory **PT,** or it may coincide with the radius of the turn of the road segment 7. By analyzing the variability band, and in particular the width of the variability band corresponding to the maximum distance **Dₘₐₓ,** it is possible to determine a driving difficulty associated with the road segment 7. Typically, a small maximum distance **Dₘₐₓ** corresponds to an increased driving difficulty **DD,** while a large maximum distance **Dₘₐₓ** corresponds to a reduced driving difficulty **DD.**

The width **Dₘₐₓ** of the variability band may be compared to some pre-determined threshold in order to determine a driving difficulty **DD** of the road segment 7. For example, the threshold may be a fixed value, or it may be a value which is relative to a specific parameter, such as lane width, length of the host vehicle **1,** turn radius, etc. If the width **Dₘₐₓ** of the variability band is less than the threshold, an increased driving difficulty **DD** may be determined. Further, other parameters of the variability band may be used to determine the driving difficulty **DD.** Such parameter may e.g. include the length of the variability band (a short variability band may correspond to increased driving difficulty **DD** as less flexibility in driving is allowed).

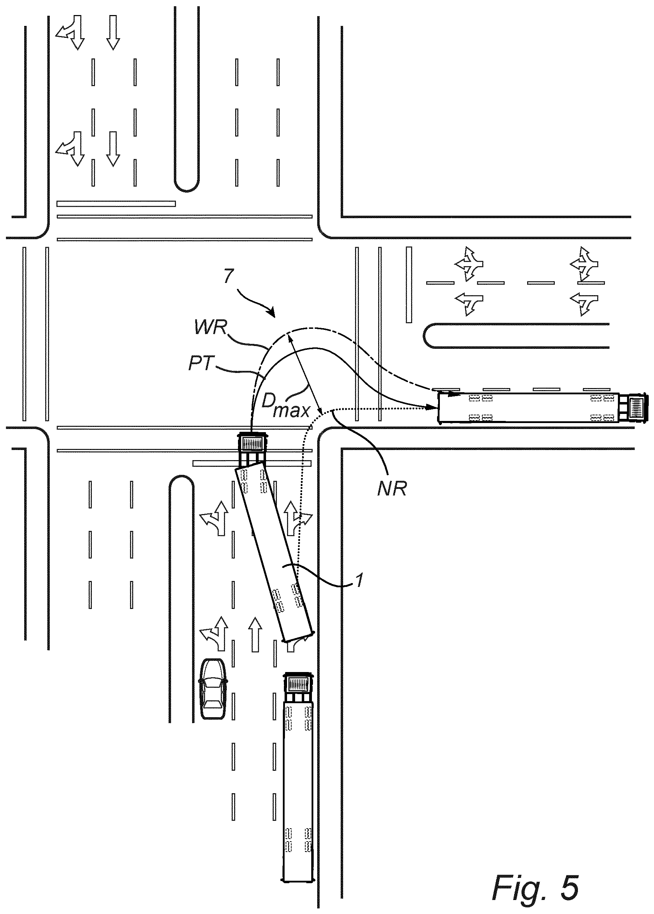

In **FIG. 5** an example of a host vehicle **1** traversing a right turn is shown. In the shown example, the solid line **PT** indicates the most preferred trajectory for the host vehicle **1.** The traversing data **TD** also comprises information of a previous vehicle traversing the road segment 7 along a narrow route **NR** indicated by the inner dashed line, as well as information of a previous vehicle traversing the road segment 7 along a wide route **WR** indicated by the outer dashed line. It should be noted that the narrow route **NR** will not be possible for the vehicle type of the host vehicle **1,** but this traversing data **TD** may represent a smaller vehicle, such as a passenger car, traversing the road segment 7.

The preferred trajectory **PT** may be obtained from the variability band. In such example the preferred trajectory **PT** may be obtained by determining that a specific route is most frequent, as this would indicate that most vehicles chooses such trajectory when traversing the road segment 7. The preferred trajectory **PT** may in other examples be calculated based on existing formulas.

The narrow route **NR** and the wide route **WR** form outer boundaries of the traversing data **TD.** By analyzing the variability band, and in particular the width of the variability band corresponding to the maximum distance **Dₘₐₓ**, it is possible to determine a driving difficulty associated with the road segment 7.

Also in this case the width **Dₘₐₓ** of the variability band may be compared to some pre-determined threshold in order to determine a driving difficulty **DD** of the road segment 7. For example, the threshold may be a fixed value, or it may be a value which is relative to a specific parameter, such as lane width, length of the host vehicle **1,** turn radius, etc.

For the examples described with reference to **FIG. 4** and **FIG. 5****,** the width **Dₘₐₓ** may indicate the required driving precision of the host vehicle **1** when traversing the upcoming road segment 7. Although the width **Dₘₐₓ** is easily identified as a significant parameter in the shown examples, the opposite may also occur; the width **Dₘₐₓ** being very small, thereby indicating that only a very small deviation in the trajectory is allowed in order to safely pass the road segment 7.

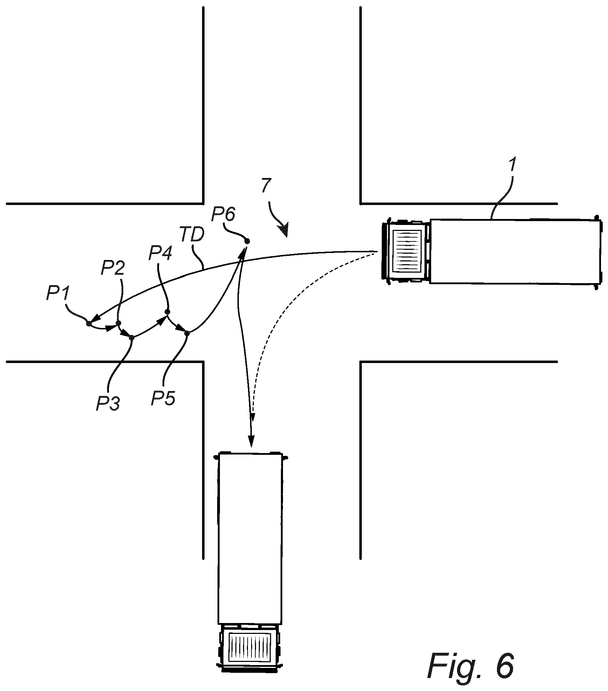

In **FIG. 6** another example is shown. The host vehicle **1** is here to make a left turn at a narrow crossing, forming a road segment 7. Traversing data **TD** comprises information of a previous vehicle making the same left turn, indicated by the solid line. The traversing data **TD** comprises points **P1-P6** of the multipoint turn required to traverse the crossing by the previous vehicle. These points **P1-P6** thus represent, or indicate, the number of times the host vehicle **1** changes direction from forward to reverse or from reverse to forward when traversing the upcoming road segment 7. By recognizing one or more points **P1-P6** in the traversing data **TD** it can be determined that the road segment 7 is associated with a driving difficulty **DD.**

For the example where the driving difficulty **DD** is determined as a non-binary variable, the number of points **P1-P6** may be indicative of the level of difficulty; a higher number of points **P1-P6** would thus correspond to a higher level of driving difficulty **DD.** As a further example, the driving difficulty **DD** may be determined based on the distance between two adjacent points **P1-P6.** As shown in **FIG. 6****,** the distance between point **P5** and point **P6** is comparatively long, indicating that a considerable reverse driving is required in order to traverse the road segment 7. This may be associated with increased driving difficulty **DD,** as compared to if only very short reverse driving would be required (i.e. a small distance between point **P5** and point **P6**). These two concepts (i.e. number of points **P1-P6** and distance between adjacent points **P1-P6**) may be used independently, or they may be combined in order to determine an increased driving difficulty **DD.** An increased driving difficulty **DD** may be determined as an example only if i) the number of points **P1-P6** is higher than a first threshold, and ii) the distance between two adjacent points **P1-P6** is higher than a second threshold. Optionally, or in combination, an increased driving difficulty **DD** may be determined if the number of points **P1-P6** is higher than a third threshold, no matter the distance between adjacent points **P1-P6.**

The preferred trajectory **PT** may be obtained from the number of points **P1-P6.** In such example the preferred trajectory **PT** may be obtained by determining a specific route comprising the least amount of points **P1-P6,** as this would indicate that such route would be most convenient for the driver of the host vehicle **1** when traversing the road segment 7.

Other options for obtaining the driving difficulty **DD** are also possible. For example, the driving difficulty **DD** of an upcoming road segment 7 may be obtained from a steering angle spread. The steering angle spread may be indicative of increased driving difficulty **DD** in a similar manner as the variability band explained above. For example, if the steering angle spread is large, meaning that previous traversals of the road segment 7 have been made using substantially different steering angles, this would correspond to no or low driving difficulty. If the steering angle spread is low, meaning that previous traversals have been made using substantially similar steering angles, this would correspond to increased or high driving difficulty **DD.** The steering angle spread may be included as steering data **80** (see **FIG. 2B**) in traversing data **TD,** and may be determined from the points **P1-P6.** A large steering angle spread, caused by forward and reverse operations between the points **P1-P6** may indicate a significant driving difficulty. Alternatively, the steering angle spread may be determined from the width **Dₘₐₓ** of the variability band.

The driving difficulty **DD** of an upcoming road segment 7 may be obtained from a total number of braking operations for a vehicle traversing the road segment 7. The total number of braking operations may be included as braking data **82** (see **FIG. 2B**) in traversing data **TD.** An increased number of braking operations may thus correspond to a driving difficulty of the road segment 7.

Optionally, the driving difficulty **DD** may be obtained from a maximum and/or minimum speed of at least one vehicle of the vehicle type **VT** traversing the upcoming road segment 7. The maximum and/or minimum speed is in such example included as speed data **84** (see **FIG. 2B**) in the traversing data **TD.** A low maximum speed may indicate a driving difficulty, as well as a low minimum speed.

Finally, the driving difficulty **DD** may be obtained from a relationship between the maximum and/or minimum speed of at least one vehicle of the vehicle type **VT** traversing the upcoming road segment 7 and the maximum speed limit for the upcoming road segment 7. The relationship between the maximum and/or minimum speed and the maximum speed limit is in such example included as speed relationship data **86** (see **FIG. 2B**) in the traversing data **TD.** If the relationship is less than 1, that would indicate that significant braking is required in order to safely traverse the road segment 7.

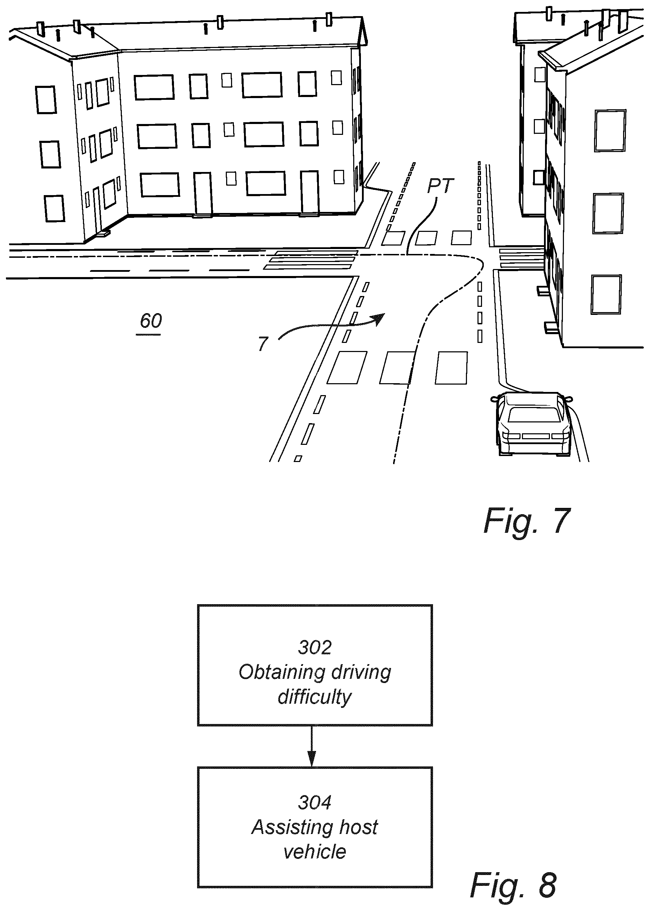

**FIG. 7** shows the view of the driver of the host vehicle **1** when approaching a road segment 7. A driving difficulty **DD** is obtained for the road segment 7, and the driver is here assisted in traversing the road segment 7 by the use of a heads-up display **60** of the host vehicle **1.** The heads-up display **60** is configured to project a preferred trajectory **PT** through the road segment 7, which the driver can choose to easily follow. Optionally, as described with reference to **FIG. 2B****,** the assist system **200** may provide assistance by applying steering assist and/or at least semi-autonomous driving through the road segment 7.

**FIG. 8** is a flow chart of a method **300** to assist a host vehicle **1** in traversing an upcoming road segment 7 according to an example. The method **300** comprises obtaining **302,** by processing circuitry of a computer system, a driving difficulty of an upcoming road segment for a host vehicle of a vehicle type. The driving difficulty is based on at least one of: points of a multipoint turn of at least one vehicle of the vehicle type traversing the upcoming road segment; or a width of a variability band of a plurality of turning trajectories of at least one vehicle of the vehicle type traversing the upcoming road segment. The method **300** further comprises assisting **304** the host vehicle 1 in traversing the upcoming road segment 7.

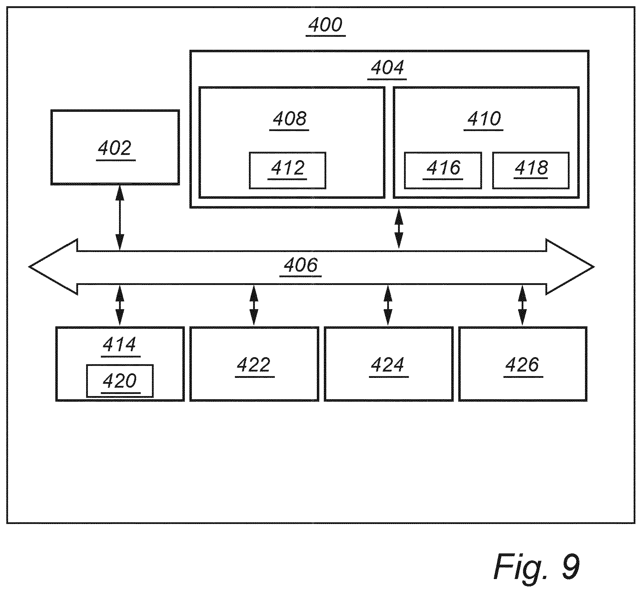

**FIG. 9** is a schematic diagram of a computer system **400** for implementing examples disclosed herein. The computer system **400** is adapted to execute instructions from a computer-readable medium to perform these and/or any of the functions or processing described herein. The computer system **400** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **400** may include any collection of devices that individually or jointly execute a set (or multiple sets) of instructions to perform any one or more of the methodologies discussed herein. Accordingly, any reference in the invention and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **400** may comprise at least one computing device or electronic device capable of including firmware, hardware, and/or executing software instructions to implement the functionality described herein. The computer system **400** may include processing circuitry **402** (e.g., processing circuitry including one or more processor devices or control units), a memory **404,** and a system bus **406.** The computer system **400** may include at least one computing device having the processing circuitry **402.** The system bus **406** provides an interface for system components including, but not limited to, the memory **404** and the processing circuitry **402.** The processing circuitry **402** may include any number of hardware components for conducting data or signal processing or for executing computer code stored in memory **404.** The processing circuitry **402** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **402** may further include computer executable code that controls operation of the programmable device.

The system bus **406** may be any of several types of bus structures that may further interconnect to a memory bus (with or without a memory controller), a peripheral bus, and/or a local bus using any of a variety of bus architectures. The memory **404** may be one or more devices for storing data and/or computer code for completing or facilitating methods described herein. The memory **404** may include database components, object code components, script components, or other types of information structure for supporting the various activities herein. Any distributed or local memory device may be utilized with the systems and methods of this description. The memory **404** may be communicably connected to the processing circuitry **402** (e.g., via a circuit or any other wired, wireless, or network connection) and may include computer code for executing one or more processes described herein. The memory **404** may include non-volatile memory **408** (e.g., read-only memory (ROM), erasable programmable read-only memory (EPROM), electrically erasable programmable read-only memory (EEPROM), etc.), and volatile memory **410** (e.g., random-access memory (RAM)), or any other medium which can be used to carry or store desired program code in the form of machine-executable instructions or data structures and which can be accessed by a computer or other machine with processing circuitry **402.** A basic input/output system (BIOS) **412** may be stored in the non-volatile memory **408** and can include the basic routines that help to transfer information between elements within the computer system **400.**

The computer system **400** may further include or be coupled to a non-transitory computer-readable storage medium such as the storage device **414,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **414** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **414** and/or in the volatile memory **410,** which may include an operating system **416** and/or one or more program modules **418.** All or a portion of the examples disclosed herein may be implemented as a computer program **420** stored on a transitory or non-transitory computer-usable or computer-readable storage medium (e.g., single medium or multiple media), such as the storage device **414,** which includes complex programming instructions (e.g., complex computer-readable program code) to cause the processing circuitry **402** to carry out actions described herein. Thus, the computer-readable program code of the computer program **420** can comprise software instructions for implementing the functionality of the examples described herein when executed by the processing circuitry **402.** In some examples, the storage device **414** may be a computer program product (e.g., readable storage medium) storing the computer program **420** thereon, where at least a portion of a computer program **420** may be loadable (e.g., into a processor) for implementing the functionality of the examples described herein when executed by the processing circuitry **402.** The processing circuitry **402** may serve as a controller or control system for the computer system **400** that is to implement the functionality described herein.

The computer system **400** may include an input device interface **422** configured to receive input and selections to be communicated to the computer system **400** when executing instructions, such as from a keyboard, mouse, touch-sensitive surface, etc. Such input devices may be connected to the processing circuitry **402** through the input device interface **422** coupled to the system bus **406** but can be connected through other interfaces, such as a parallel port, an Institute of Electrical and Electronic Engineers (IEEE) 1394 serial port, a Universal Serial Bus (USB) port, an IR interface, and the like. The computer system **400** may include an output device interface **424** configured to forward output, such as to a display, a video display unit (e.g., a liquid crystal display (LCD) or a cathode ray tube (CRT)). The computer system **400** may include a communications interface **426** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

## Claims

1. A computer system comprising processing circuitry configured to:
obtain a driving difficulty (**DD**) of an upcoming road segment (**7**) for a host vehicle (**1**) of a vehicle type (**VT**), the driving difficulty (**DD**) based on at least one of:
points **(P1-P5)** of a multipoint turn of at least one vehicle of the vehicle type (**VT**) traversing the upcoming road segment (**7**);
a width (**Dₘₐₓ**) of a variability band of a plurality of turning trajectories of at least one vehicle of the vehicle type (**VT**) traversing the upcoming road segment (**7**);
assist the host vehicle (**1**) in traversing the upcoming road segment (7) based on the driving difficulty (DD).

2. The computer system of claim 1, wherein the points (**P1-P5**) of a multipoint turn indicates forward and reverse operations by the host vehicle (**1**) in traversing the upcoming road segment (**7**).

3. The computer system of claim 1 or 2, wherein the width (**Dₘₐₓ**) of the variability band indicates driving precision by the host vehicle (**1**) in traversing the upcoming road segment (**7**).

4. The computer system of any of claims 1-3, wherein assisting the host vehicle (**1**) in traversing the upcoming road segment (**7**) further comprises:
obtain a preferred trajectory (**PT**) for the host vehicle (**1**), and
assist the host vehicle (**1**) by guiding the host vehicle (**1**) along the preferred trajectory (**PT**).

5. The computer system of claim 4, wherein assisting the host vehicle (**1**) by guiding the host vehicle (**1**) along the preferred trajectory (**PT**) further comprises at least one of:
guide host vehicle (**1**) by visualizing the preferred trajectory (**PT**) to the driver;
guide the host vehicle (**1**) by applying steering assist; or
guide the host vehicle (**1**) by applying at least partly autonomous driving.

6. The computer system of any of claims 4-5, wherein the processing circuitry is further configured to:
obtain the preferred trajectory (**PT**) from a plurality of reference trajectories, wherein each reference trajectory corresponds to a trajectory of at least one vehicle of the vehicle type (**VT**) traversing the upcoming road segment (**7**).

7. The computer system of claim 6, wherein the processing circuitry is further configured to:
obtain the variability band from the plurality of reference trajectories, and
obtain the preferred trajectory (**PT**) based on the variability band.

8. The computer system of any of claims 6 or 7, wherein the processing circuitry is further configured to:
obtain the points (**P1-P5**) of a multipoint turn from the plurality of reference trajectories, and
obtain the preferred trajectory (**PT**) based on the total number of points (**P1-P5**) of the multipoint turn for each reference trajectory.

9. The computer system of claim 1, wherein:
the points (**P1-P5**) of a multipoint turn indicates forward and reverse operations by the host vehicle (**1**) in traversing the upcoming road segment (**7**);
wherein the width (**Dₘₐₓ**) of the variability band indicates driving precision by the host vehicle (**1**) in traversing the upcoming road segment (**7**);
wherein assisting the host vehicle (**1**) in traversing the upcoming road segment (**7**) further comprises:
obtain a preferred trajectory (**PT**) for the host vehicle (**1**), and
assist the host vehicle (**1**) by guiding the host vehicle (**1**) along the preferred trajectory (**PT**) by at least one of:
guide host vehicle (**1**) by visualizing the preferred trajectory (**PT**) to the driver;
guide the host vehicle (**1**) by applying steering assist; or
guide the host vehicle (**1**) by applying at least partly autonomous driving;
wherein the processing circuitry is further configured to:
obtain the preferred trajectory (**PT**) from a plurality of reference trajectories, wherein each reference trajectory corresponds to a trajectory of at least one vehicle of the vehicle type (**VT**) traversing the upcoming road segment (**7**);
wherein the processing circuitry is further configured to:
obtain the variability band from the plurality of reference trajectories, and
obtain the preferred trajectory (**PT**) based on the variability band;
wherein the processing circuitry is further configured to:
obtain the points (**P1-P5**) of a multipoint turn from the plurality of reference trajectories, and
obtain the preferred trajectory (**PT**) based on the total number of points (**P1-P5**) of the multipoint turn for each reference trajectory;
wherein the processing circuitry is further configured to:
indicate the upcoming road segment (**7**) on a map (**50**) of the host vehicle (**1**); and
wherein the processing circuitry is further configured to store traversing data (**TD**) of the host vehicle (**1**) traversing the road segment (**7**).

10. A vehicle (**1**) comprising the computer system of any of claims 1-9.

11. A computer-implemented method, comprising:
obtaining (**302**), by processing circuitry of a computer system, a driving difficulty (**DD**) of an upcoming road segment (**7**) for a host vehicle (**1**) of a vehicle type (**VT**), the driving difficulty (**DD**) based on at least one of:
points (**P1-P5**) of a multipoint turn of at least one vehicle of the vehicle type (**VT**) traversing the upcoming road segment (**7**);
a width (**Dₘₐₓ**) of a variability band of a plurality of turning trajectories of at least one vehicle of the vehicle type (**VT**) traversing the upcoming road segment (**7**); and
assisting (**304**) the host vehicle (**1**) in traversing the upcoming road segment (**7**) based on the driving difficulty (DD).

12. The method of claim 11, wherein assisting (**304**) the host vehicle (**1**) in traversing the upcoming road segment (**7**) further comprises:
obtaining a preferred trajectory (**PT**) for the host vehicle (**1**), and
assisting (**304**) the host vehicle (**1**) by guiding the host vehicle (**1**) along the preferred trajectory (**PT**).

13. A computer program product comprising program code for performing, when executed by the processing circuitry, the method of any of claims 11-12.

14. A non-transitory computer-readable storage medium comprising instructions, which when executed by the processing circuitry, cause the processing circuitry to perform the method of any of claims 11-12.

## Patentansprüche

1. Computersystem, umfassend Verarbeitungsschaltung, die zu Folgendem konfiguriert ist:
Erlangen einer Fahrschwierigkeit (**DD**) eines bevorstehenden Straßenabschnitts (**7**) für ein Host-Fahrzeug (**1)** eines Fahrzeugtyps (**VT**), wobei die Fahrschwierigkeit (**DD**) auf mindestens einem von Folgenden basiert:
Punkten (**P1-P5**) einer Mehrpunktkurve mindestens eines Fahrzeugs des Fahrzeugtyps (**VT**), das den bevorstehenden Straßenabschnitt (**7**) durchfährt;
einer Breite (**Dₘₐₓ**) eines Variabilitätsbands einer Vielzahl von kurvigen Trajektorien mindestens eines Fahrzeugs des Fahrzeugtyps (**VT**), das den bevorstehenden Straßenabschnitt (**7**) durchfährt;
Unterstützen des Host-Fahrzeugs (**1**) beim Durchfahren des bevorstehenden Straßenabschnitts (**7**) basierend auf der Fahrschwierigkeit (**DD**).

2. Computersystem nach Anspruch 1, wobei die Punkte **(P1-P5)** einer Mehrpunktkurve Vorwärts- und Rückwärtsfahrten des Host-Fahrzeugs (**1**) beim Durchfahren des bevorstehenden Straßenabschnitts (**7**) angeben.

3. Computersystem nach Anspruch 1 oder 2, wobei die Breite (**Dₘₐₓ**) des Variabilitätsbands eine Fahrpräzision des Host-Fahrzeugs (**1**) beim Durchfahren des bevorstehenden Straßenabschnitts (**7**) angibt.

4. Computersystem nach einem der Ansprüche 1 bis 3, wobei ein Unterstützen des Host-Fahrzeugs (**1**) beim Durchfahren des bevorstehenden Straßenabschnitts (**7**) ferner Folgendes umfasst:
Erlangen einer bevorzugten Trajektorie (**PT**) für das Host-Fahrzeug (**1**), und
Unterstützen des Host-Fahrzeugs (**1**), indem das Host-Fahrzeug (**1**) entlang der bevorzugten Trajektorie (**PT**) geführt wird.

5. Computersystem nach Anspruch 4, wobei ein Unterstützen des Host-Fahrzeugs (**1**) durch Führen des Host-Fahrzeugs (**1**) entlang der bevorzugten Trajektorie (**PT**) ferner mindestens eines von Folgenden umfasst:
Führen des Host-Fahrzeugs (**1**), indem dem Fahrer die bevorzugte Trajektorie (**PT**) angezeigt wird;
Führen des Host-Fahrzeugs (**1**) durch Anwenden von Lenkunterstützung; oder
Führen des Host-Fahrzeugs (**1**) durch Anwenden von zumindest teilautonomem Fahren.

6. Computersystem nach einem der Ansprüche 4-5, wobei die Verarbeitungsschaltung ferner zu Folgendem konfiguriert ist:
Erlangen der bevorzugten Trajektorie (**PT**) aus einer Vielzahl von Referenztrajektorien, wobei jede Referenztrajektorie einer Trajektorie von mindestens einem Fahrzeug des Fahrzeugtyps (**VT**) entspricht, das den bevorstehenden Straßenabschnitt (**7**) durchfährt.

7. Computersystem nach Anspruch 6, wobei die Verarbeitungsschaltung ferner zu Folgendem konfiguriert ist:
Erlangen des Variabilitätsbands aus der Vielzahl der Referenztrajektorien, und
Erlangen der bevorzugten Trajektorie (**PT**) basierend auf dem Variabilitätsband.

8. Computersystem nach einem der Ansprüche 6 oder 7, wobei die Verarbeitungsschaltung ferner zu Folgendem konfiguriert ist:
Erlangen der Punkte (**P1-P5**) einer Mehrpunktkurve aus der Vielzahl von Referenztrajektorien, und
Erlangen der bevorzugten Trajektorie (**PT**) basierend auf der Gesamtzahl der Punkte (**P1-P5**) der Mehrpunktkurve für jede Referenztrajektorie.

9. Computersystem nach Anspruch 1, wobei:
die Punkte **(P1-P5)** einer Mehrpunktkurve Vorwärts- und Rückwärtsfahrten des Host-Fahrzeugs (**1**) beim Durchfahren des bevorstehenden Straßenabschnitts (**7**) angeben;
die Breite (**Dₘₐₓ**) des Variabilitätsbands eine Fahrpräzision des Host-Fahrzeugs (**1**) beim Durchfahren des bevorstehenden Straßenabschnitts (**7**) angibt;
ein Unterstützen des Host-Fahrzeugs (**1**) beim Durchfahren des bevorstehenden Straßenabschnitts (**7**) ferner Folgendes umfasst:
Erlangen einer bevorzugten Trajektorie (**PT**) für das Host-Fahrzeug (**1**), und
Unterstützen des Host-Fahrzeugs (**1**), indem das Host-Fahrzeug (**1**) entlang der bevorzugten Trajektorie (**PT**) geführt wird durch mindestens eines von Folgenden:
Führen des Host-Fahrzeugs (**1**), indem dem Fahrer die bevorzugte Trajektorie (**PT**) angezeigt wird;
Führen des Host-Fahrzeugs (**1**) durch Anwenden von Lenkunterstützung; oder
Führen des Host-Fahrzeugs (**1**) durch Anwenden von zumindest teilautonomem Fahren;
wobei die Verarbeitungsschaltung ferner zu Folgendem konfiguriert ist:
Erlangen der bevorzugten Trajektorie (**PT**) aus einer Vielzahl von Referenztrajektorien, wobei jede Referenztrajektorie einer Trajektorie von mindestens einem Fahrzeug des Fahrzeugtyps (**VT**) entspricht, das den bevorstehenden Straßenabschnitt (7) durchfährt;
wobei die Verarbeitungsschaltung ferner zu Folgendem konfiguriert ist:
Erlangen des Variabilitätsbands aus der Vielzahl der Referenztrajektorien, und
Erlangen der bevorzugten Trajektorie (**PT**) basierend auf dem Variabilitätsband;
wobei die Verarbeitungsschaltung ferner zu Folgendem konfiguriert ist:
Erlangen der Punkte (**P1-P5**) einer Mehrpunktkurve aus der Vielzahl von Referenztrajektorien, und
Erlangen der bevorzugten Trajektorie (**PT**) basierend auf der Gesamtzahl der Punkte **(P1-P5)** der Mehrpunktkurve für jede Referenztrajektorie;
wobei die Verarbeitungsschaltung ferner zu Folgendem konfiguriert ist:
Angeben des bevorstehenden Straßenabschnitts (**7**) auf einer Karte (**50**) des Host-Fahrzeugs (**1**); und
wobei die Verarbeitungsschaltung ferner konfiguriert ist, um Durchfahrtsdaten (**TD**) des Host-Fahrzeugs (**1**), das den Straßenabschnitt (**7**) durchfährt, zu speichern.

10. Fahrzeug (1), umfassend das Computersystem nach einem der Ansprüche 1-9.

11. Computerimplementiertes Verfahren, umfassend:
Erlangen (**302**), durch eine Verarbeitungsschaltung eines Computersystems, einer Fahrschwierigkeit (**DD**) eines bevorstehenden Straßenabschnitts (**7**) für ein Host-Fahrzeug (**1**) eines Fahrzeugtyps (**VT**), wobei die Fahrschwierigkeit (**DD**) auf mindestens einem von Folgenden basiert:
Punkten (**P1-P5**) einer Mehrpunktkurve mindestens eines Fahrzeugs des Fahrzeugtyps (**VT**), das den bevorstehenden Straßenabschnitt (**7**) durchfährt;
einer Breite (**Dₘₐₓ**) eines Variabilitätsbands einer Vielzahl von kurvigen Trajektorien mindestens eines Fahrzeugs des Fahrzeugtyps (**VT**), das den bevorstehenden Straßenabschnitt (**7**) durchfährt; und
Unterstützen (**304**) des Host-Fahrzeugs (**1**) beim Durchfahren des bevorstehenden Straßenabschnitts (**7**) basierend auf der Fahrschwierigkeit (**DD**).

12. Verfahren nach Anspruch 11, wobei ein Unterstützen (**304**) des Host-Fahrzeugs (**1**) beim Durchfahren des bevorstehenden Straßenabschnitts (**7**) ferner Folgendes umfasst:
Erlangen einer bevorzugten Trajektorie (**PT**) für das Host-Fahrzeug (**1**), und
Unterstützen (**304**) des Host-Fahrzeugs (**1**), indem das Host-Fahrzeug (**1**) entlang der bevorzugten Trajektorie (**PT**) geführt wird.

13. Computerprogrammprodukt, umfassend Programmcode zum Ausführen des Verfahrens nach einem der Ansprüche 11 bis 12, wenn er durch die Verarbeitungsschaltung ausgeführt wird.

14. Nicht-transitorisches, computerlesbares Speichermedium, umfassend Anweisungen, die, wenn sie von der Verarbeitungsschaltung ausgeführt werden, die Verarbeitungsschaltung veranlassen, das Verfahren nach einem der Ansprüche 11-12 durchzuführen.

## Revendications

1. Système informatique comprenant un circuit de traitement configuré pour :
obtenir une difficulté de conduite (**DD**) d'un segment de route à venir (**7**) pour un véhicule hôte (**1**) d'un type de véhicule (**VT**), la difficulté de conduite (**DD**) étant fondée sur au moins l'un des éléments suivants :
des points (**P1-P5**) d'un virage multipoint d'au moins un véhicule du type de véhicule (**VT**) traversant le segment de route à venir (**7**) ;
une largeur (**Dₘₐₓ**) d'une bande de variabilité d'une pluralité de trajectoires de virage d'au moins un véhicule du type de véhicule (**VT**) traversant le segment de route à venir (**7**) ;
aider le véhicule hôte (**1**) à traverser le segment de route à venir (7) en fonction de la difficulté de conduite (**DD**).

2. Système informatique selon la revendication 1, dans lequel les points (**P1-P5**) d'un virage multipoint indiquent des opérations de marche avant et de marche arrière du véhicule hôte (**1**) dans la traversée du segment de route à venir (**7**).

3. Système informatique selon la revendication 1 ou 2, dans lequel la largeur (**Dₘₐₓ**) de la bande de variabilité indique la précision de conduite du véhicule hôte (**1**) dans la traversée du segment de route à venir (**7**).

4. Système informatique selon l'une quelconque des revendications 1 à 3, dans lequel l'assistance au véhicule hôte (**1**) dans la traversée du segment de route à venir (**7**) comprend en outre :
l'obtention d'une trajectoire préférée (**PT**) pour le véhicule hôte (**1**), et
l'assistance au véhicule hôte (**1**) en guidant le véhicule hôte (**1**) le long de la trajectoire préférée (**PT**).

5. Système informatique selon la revendication 4, dans lequel l'assistance au véhicule hôte (**1**) en guidant le véhicule hôte (**1**) le long de la trajectoire préférée (**PT**) comprend en outre au moins l'un des :
guidage du véhicule hôte (**1**) en affichant la trajectoire préférée (**PT**) pour le conducteur ;
guidage du véhicule hôte (**1**) en appliquant une assistance à la direction ; ou
guidage du véhicule hôte (**1**) en appliquant une conduite au moins partiellement autonome.

6. Système informatique selon l'une quelconque des revendications 4 et 5, dans lequel le circuit de traitement est en outre configuré pour :
obtenir la trajectoire préférée (**PT**) parmi une pluralité de trajectoires de référence, dans lequel chaque trajectoire de référence correspond à une trajectoire d'au moins un véhicule du type de véhicule (**VT**) traversant le segment de route à venir (**7**).

7. Système informatique selon la revendication 6, dans lequel le circuit de traitement est en outre configuré pour :
obtenir la bande de variabilité à partir de la pluralité de trajectoires de référence, et
obtenir la trajectoire préférée (**PT**) sur la base de la bande de variabilité.

8. Système informatique selon l'une quelconque des revendications 6 ou 7, dans lequel le circuit de traitement est en outre configuré pour :
obtenir les points (**P1-P5**) d'un virage multipoint à partir de la pluralité de trajectoires de référence, et
obtenir la trajectoire préférée (**PT**) sur la base du nombre total de points (**P1-P5**) du virage multipoint pour chaque trajectoire de référence.

9. Système informatique selon la revendication 1, dans lequel :
les points (**P1-P5**) d'un virage multipoint indiquent des opérations de marche avant et de marche arrière du véhicule hôte (**1**) dans la traversée du segment de route à venir (**7**) ;
dans lequel la largeur (**Dₘₐₓ**) de la bande de variabilité indique la précision de conduite du véhicule hôte (**1**) dans la traversée du segment de route à venir (**7**) ;
dans lequel l'assistance au véhicule hôte (**1**) dans la traversée du segment de route à venir (**7**) comprend en outre :
l'obtention d'une trajectoire préférée (**PT**) pour le véhicule hôte (**1**), et
l'assistance au véhicule hôte (**1**) en guidant le véhicule hôte (**1**) le long de la trajectoire préférée (**PT**) par au moins l'un des :
guidage du véhicule hôte (**1**) en affichant la trajectoire préférée (**PT**) pour le conducteur ;
guidage du véhicule hôte (**1**) en appliquant une assistance à la direction ; ou
guidage du véhicule hôte (**1**) en appliquant une conduite au moins partiellement autonome ;
dans lequel le circuit de traitement est en outre configuré pour :
obtenir la trajectoire préférée (**PT**) parmi une pluralité de trajectoires de référence, dans lequel chaque trajectoire de référence correspond à une trajectoire d'au moins un véhicule du type de véhicule (**VT**) traversant le segment de route à venir (**7**) ;
dans lequel le circuit de traitement est en outre configuré pour :
obtenir la bande de variabilité à partir de la pluralité de trajectoires de référence, et
obtenir la trajectoire préférée (**PT**) sur la base de la bande de variabilité ;
dans lequel le circuit de traitement est en outre configuré pour :
obtenir les points (**P1-P5**) d'un virage multipoint à partir de la pluralité de trajectoires de référence, et
obtenir la trajectoire préférée (**PT**) sur la base du nombre total de points (**P1-P5**) du virage multipoint pour chaque trajectoire de référence ;
dans lequel le circuit de traitement est en outre configuré pour :
indiquer le segment de route à venir (**7**) sur une carte (**50**) du véhicule hôte (**1**) ; et
dans lequel le circuit de traitement est en outre configuré pour stocker des données de traversée (**TD**) du véhicule hôte (**1**) traversant le segment de route (**7**).

10. Véhicule (**1**) comprenant le système informatique selon l'une quelconque des revendications 1 à 9.

11. Procédé mis en œuvre par ordinateur comprenant :
l'obtention (**302**), par le circuit de traitement d'un système informatique, d'une difficulté de conduite (**DD**) d'un segment de route à venir (**7**) pour un véhicule hôte (**1**) d'un type de véhicule (**VT**), la difficulté de conduite (**DD**) étant fondée sur au moins l'un des éléments suivants :
des points (**P1-P5**) d'un virage multipoint d'au moins un véhicule du type de véhicule (**VT**) traversant le segment de route à venir (**7**) ;
une largeur (**Dₘₐₓ**) d'une bande de variabilité d'une pluralité de trajectoires de virage d'au moins un véhicule du type de véhicule (**VT**) traversant le segment de route à venir (**7**) ; et
l'assistance (**304**) au véhicule hôte (**1**) dans la traversée du segment de route à venir (**7**) en fonction de la difficulté de conduite (**DD**).

12. Procédé selon la revendication 11, dans lequel l'assistance (**304**) au véhicule hôte (**1**) dans la traversée du segment de route à venir (**7**) comprend en outre :
l'obtention d'une trajectoire préférée (**PT**) pour le véhicule hôte (**1**), et
l'assistance (**304**) au véhicule hôte (**1**) en guidant le véhicule hôte (**1**) le long de la trajectoire préférée (**PT**).

13. Produit de programme informatique comprenant un code de programme pour réaliser, lorsqu'il est exécuté par le circuit de traitement, le procédé selon l'une quelconque des revendications 11 et 12.

14. Support de stockage non transitoire lisible par ordinateur comprenant des instructions qui, lorsqu'elles sont exécutées par le circuit de traitement, amènent le circuit de traitement à réaliser le procédé selon l'une quelconque des revendications 11 et 12.
